(19) Europäisches Patentamt

European Patent Office

Office européen des brevets

(11) **EP 4 615 360 B1**

(12) **EUROPEAN PATENT SPECIFICATION**

(45) Date of publication and mention
of the grant of the patent:
**04.03.2026 Bulletin 2026/10**

(21) Application number: **23800801.5**

(22) Date of filing: **01.11.2023**

(51) International Patent Classification (IPC):
*A61C 17/22* (2006.01)   *A46B 15/00* (2006.01)

(52) Cooperative Patent Classification (CPC):
**A61C 17/221; A46B 15/0006; A46B 15/0044;**
A46B 2200/1066

(86) International application number:
**PCT/EP2023/080455**

(87) International publication number:
**WO 2024/099846 (16.05.2024 Gazette 2024/20)**

(54) **PERSONAL CARE DEVICE**

KÖRPERPFLEGEVORRICHTUNG

DISPOSITIF DE SOINS PERSONNELS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **07.11.2022 EP 22205696**

(43) Date of publication of application:
**17.09.2025 Bulletin 2025/38**

(73) Proprietor: **Koninklijke Philips N.V.
5656 AG Eindhoven (NL)**

(72) Inventors:
• **VLUTTERS, Ruud
5656 AG Eindhoven (NL)**
• **YUAN, Zhaorui
5656 AG Eindhoven (NL)**

• **ISMAIL, Rameez
5656 AG Eindhoven (NL)**
• **SAEED, Aaqib
5656 AG Eindhoven (NL)**
• **RIETMAN, Ronald
5656AG Eindhoven (NL)**
• **DE GROOT, Koen, Theo, Johan
5656AG Eindhoven (NL)**
• **VIJAYKUMAR, Adithya
5656AG Eindhoven (NL)**

(74) Representative: **Philips Intellectual Property &
Standards
High Tech Campus 52
5656 AG Eindhoven (NL)**

(56) References cited:
US-A1- 2013 074 616    US-A1- 2017 303 673
US-A1- 2019 082 819

**Description**

FIELD OF THE INVENTION

This invention relates to personal care devices, and in particular relates to hand held devices which assistance to a user to achieve the most suitable operation of the device. The invention for example relates to toothbrushes which assist the user in achieving good brushing technique.

BACKGROUND OF THE INVENTION

In order for a person to properly brush their teeth and prevent future oral health issues, the brushing technique needs to ensure that all teeth and gingiva are properly cleaned.

The American Dental Association for example recommends brushing twice a day for two minutes with fluoride toothpaste. The guideline does not go into much detail about the various aspects that can make or break a good brushing session. A person should of course apply enough pressure, but also not too much. All the different sides of the teeth should be brushed, without skipping teeth segments. These aspects are part of the brushing technique, and in combination with the brushing routine (i.e. for how often and for how long) are essential for a good oral health.

It is known to provide feedback to a user, to help them achieve a suitable brushing routine. In the simplest powered toothbrushes, there is a counter that guides users to brush for at least two minutes.

In more advanced toothbrushes, the toothbrush measures if the right force is applied, and gives a warning when excessive force is applied. Additionally, known powered toothbrushes can measure if a user scrubs excessively. Ideally a powered toothbrush user should scrub much less than a manual toothbrush user.

In the latest generation Philips Sonicare Prestige 9900 toothbrush, there is also coverage guidance, which provides feedback as to whether all teeth-segments have been brushed for enough time. Ensuring for example that the user also brushed his/her inner front teeth for enough time, as these are typically forgotten.

One aspect which is not addressed in current commercially available toothbrushes is to ensure that the user brushes his/her teeth with the right brushing angle. By using the right brushing angle (45 degree), using the so-called Bass angle technique, plaque is better removed near the gingiva.

US 8393037 discloses a toothbrush which determines which tooth segment is being brushed, the force that is being applied and the brushing angle. The user is for example given guidance to tilt the toothbrush to a most optimum brushing angle (e.g. 35 to 55 degrees) using notification alerts in the form of audible beeps. A voice, light or vibration output may also be used. However, these do not provide an intuitive output signal for the user.

Instead, once the brushing angle is measured, deviations from the ideal brushing angle need to be converted into an easily interpretable feedback signal to guide users to rotate the toothbrush clockwise or anti-clockwise towards the ideal angle.

US 20196/082819 discloses a toothbrush with an illumination ring around the top of the handle (between the handle and the head). The toothbrush has an acceleration sensor for detecting a toothbrush angle. The illumination ring is used to denote on/off of the toothbrush as well as different toothbrush angles. The illumination ring is controllable to different intensities and different blinking frequencies.

US 2013/074616 discloses a toothbrush with sensors for detecting brushing patterns, and also discloses an illumination ring around the body of the toothbrush. The illumination ring is used to indicate when a detected brushing pattern matches a reference, so that the user can proceed to a next brushing region.

SUMMARY OF THE INVENTION

The invention is defined by the claims.

According to the invention, there is provided a personal health care device comprising:

> a device head and a device handle;
> a sensor for providing a sensor output which depends on a motion or orientation of the device;
> a light output ring for generating a rotational lighting effect around the device handle; and
> a controller for processing the sensor output, wherein the processor is configured to:

>> derive a current usage angle from the sensor output;
>> determine an ideal usage angle;
>> compare the current usage angle and the ideal usage angle; and
>> control the light output ring to provide feedback to the user of the device, wherein the rotation of the rotational lighting effect indicates a direction of device rotation required to approach the ideal usage angle.

The invention provides a device which derives a usage angle and provides user feedback including real-time feedback on the device to rotate the device towards a better usage angle. The controller may also provide offline feedback on how usage angles have been applied in previous personal health care sessions.

The ideal usage angle for example is dependent on the location of the device.

The sensor may be for measuring a motion or orientation. For example it may comprise an inertia monitoring unit, such as accelerometer and gyroscope, to measure motion as accelerations and angular velocities of the device. Another example is a force sensor for measuring a (reaction) force (as a vector with magnitude and direction) on the device head. This can be used to derive the angle between the device head and the surface against which a force is applied. Thus various sensors may be used to determine the current usage angle.

The controller is preferably configured to generate a light animation comprising a clockwise or anti-clockwise lighting pattern around the light ring. Thus, user feedback is provided using a light ring which generates a pattern which visibly runs clockwise or anti-clockwise. The light output ring for example comprising a ring of LEDs which define a set of angular segments.

The light output ring may be around a base of the device handle, opposite the device head. Alternatively, or additionally, the light output ring may be around a top of the device handle, adjacent the device head.

The controller may comprise an AI model for determining the usage angle. This provides an accurate way to derive the current usage angle. The AI model for example comprises a long short-term memory (LSTM) model.

In one set of examples, the personal health care device comprises a powered toothbrush with a toothbrush head and a toothbrush handle, wherein the usage angle is a brushing angle, and the processor is configured to determine the ideal brushing angle by:

determining a current tooth segment at which the toothbrush head is located;
determining the ideal brushing angle based on the current brushing segment.

Thus, the ideal brushing angle may depend on the particular brushing segment at which the toothbrush head is located.

Brushing with the correct angle, also called brushing with the Bass angle technique, results in more plaque removal at the gingiva. The device thus provides assistance to the user to achieve an optimum brushing technique.

The controller may be configured to compare the current usage angle and the ideal usage angle using both sine and cosine values. This enables the direction in which rotation is needed to be determined (as well as the amount of rotation needed).

The controller may comprise:

a first neural network to determine the brushing angle;
a second neural network to determine the brushing segment; and
a comparator to compare the ideal and current brushing angle.

The first neural network for example comprises an LSTM layer and an output layer to predict angles, (e.g. convolutional layers with a two-channel output that provides the sine and cosine component of the brushing angle). The second neural network determines the location of the toothbrush head, so that the brushing segment can be identified.

A look up table may be used that stores the ideal brushing angle values for each segment. Hence, the ideal brushing angle can be retrieved using the output of the second neural network. Additionally, time thresholds can be introduced to only show the light animation when brushing for more than a predetermined time (e.g. 4 to 10 seconds) with the wrong brushing angle.

BRIEF DESCRIPTION OF THE DRAWINGS

For a better understanding of the invention, and to show more clearly how it may be carried into effect, reference will now be made, by way of example only, to the accompanying drawings, in which:

Fig. 1 shows a personal care device in the form of a toothbrush;
Fig. 2 shows angle conventions to illustrate the brushing angle;
Fig. 3 shows an AI model for angle prediction;
Figs. 4 and 5 show examples of the predicted brushing angles as function of time;
Fig. 6 shows an AI model for brushing segment prediction;
Fig. 7 shows the two AI models integrated into one; and
Fig. 8 shows a method of providing usage angle guidance.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a personal health care device which monitors one or more parameters which enable a current usage angle to be derived. There may for example be a motion sensor, for monitoring accelerations and angular velocities. The current usage angle is compared with an ideal usage angle. A light output ring around a handle of the device is used to provide feedback to the user of the device. A rotation of the lighting effect indicates a direction of device rotation required to approach the ideal usage angle.

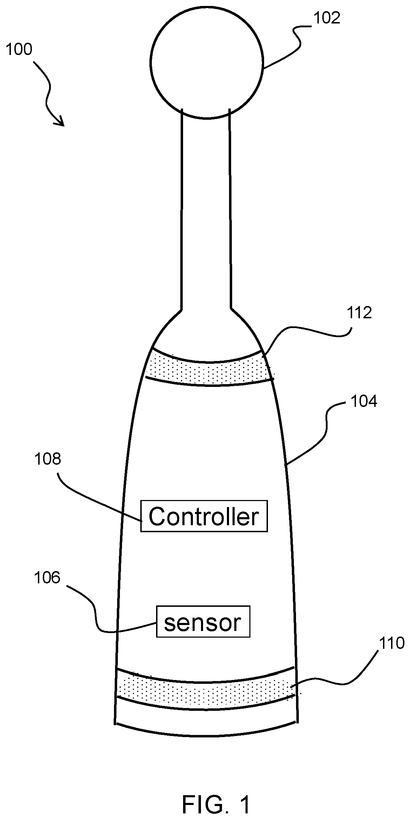

Fig. 1 shows a personal care device in the form of a toothbrush, which may be designed and controlled in accordance with the invention.

The toothbrush 100 comprises a head 102 and a handle 104. The handle 104 houses a sensor which in this example comprises an inertia monitoring unit 106 for monitoring motion of the device, and preferably comprising an accelerometer and gyroscope. It measures accelerations and angular velocities of the device, preferably 3-axis accelerations and 3-axis angular velocities. Any suitable known motion tracking sensor may be used.

Other parameters may additionally or alternatively be sensed which enable an angle of the head to be derived, such as a force sensor for monitoring a force applied by the head to the teeth.

A controller 108 processes the output provided by the sensor, in this example the measured motion is processed, for example accelerations and angular velocities. The controller controls a light output ring to provide feedback to the user. The feedback is a rotational lighting effect around the device handle. In the example shown, there is a first light output ring 110 around a base of the device handle, opposite the device head, and a second light output ring 112 around a top of the device handle, adjacent the device head.

There may be only one light output ring, or both, or indeed more than two.

In a most simple implementation, the (or each) light output ring comprises multiple LEDs in a circular configuration. The LEDs can directly shine their light to the outside of the toothbrush, or a plastic lightguide can be used to transport the light from the printed circuit board (PCB), where the LEDs are located, to the outside of the toothbrush. By way of example, a convincing rotation animation can be achieved using only 8 LEDs, so there are preferably between 8 and 30 segments around the ring. The ring extends around a longitudinal axis of the handle.

The controller derives a current usage angle from the sensor output, which in this example is the measured accelerations and angular velocities. In the case of a toothbrush, the usage angle is a brushing angle. The controller also determines an ideal usage angle and then compares the current usage angle and the ideal usage angle. The ideal usage angle for example depends on a location of the device, such as the tooth segment on which the device is being used in the case of a toothbrush. The (one or more) light output ring (s) is controlled such that a rotation of the lighting effect indicates a direction of device rotation of the toothbrush required to approach the ideal usage angle.

It is noted that existing toothbrushes already contain light rings, at the top or bottom of the toothbrush handle, enabling user feedback while brushing. These light rings are for example driven by red/green/blue (RGB) LEDs and different colors may represent different feedback messages.

The light ring used in the device of the invention is segmented so that an animation may be generated which provides a rotational effect around the toothbrush handle. The direction of rotation then guides the user to deliver the appropriate device rotation (in the same direction as the rotational direction of the rotational lighting effect) to re-align the device to the most appropriate usage (i.e., brushing) angle.

Preferably, an AI model is used to determine the current usage angle. In order to explain the implementation, a detailed example will be presented for the toothbrush application. In this application, determination of the tooth segment is also needed, since the brushing angle depends on the tooth segment. Thus, a brushing segment prediction model is also used.

In order to predict the brushing angle using an AI model, the model needs to be trained. For this, ground-truth data is needed, providing input data (IMU signals) and ideal outputs.

When building a brushing segment prediction model, it is possible to rely on manual annotators, who watch a movie of a user brushing his/her teeth, and label the teeth segment x when brushing at time step t. For a 16 segment model, x is an integer between 1 and 16, indicating the 16 segments corresponding to the combination of left/front/right, upper/lower and inner/chewing/outer teeth segments.

When building a brushing angle prediction model an annotator cannot easily determine the brushing angle between toothbrush and teeth/gumline from a video. Therefore, to generate ground-truth data, a motion tracking system may be used. To generate the ground-truth data, users are asked to brush in front of the motion tracking system, while wearing a head band and using a toothbrush, both with special motion tracking markers.

Based on the output of the motion tracking system, the location and orientation of the toothbrush can then be determined relative to the teeth, since the upper teeth are rigidly linked to the head at which the head band is mounted, with its motion tracking marker.

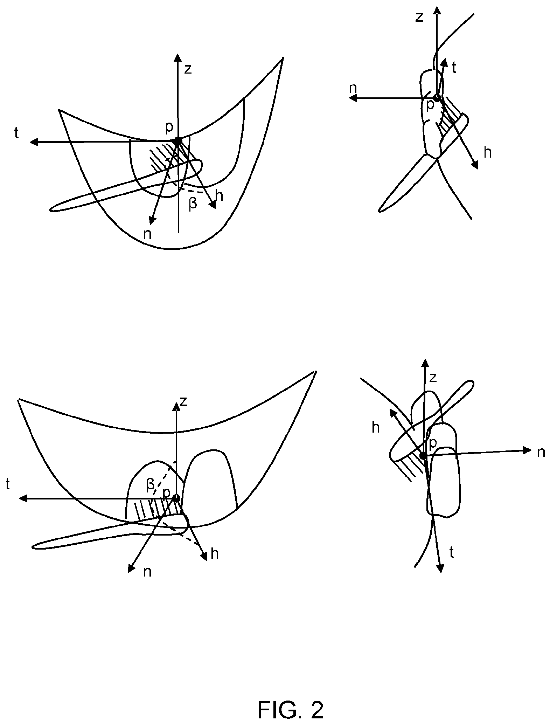

Fig. 2 shows conventions to explain the brushing angle, with the top teeth at the top and the bottom teeth at the bottom of the images:

P denotes the point where the bristle hairs touch the teeth;
h denotes the vector pointing from P, along the bristle hairs, to the brush;.
At P, a coordinate system is defined consisting of three orthogonal vectors:

t: tangent to the parabolic teeth curve (in the plane of the jaw), from left to right
n: outward normal to the teeth curve (in plane of the jaw)
z: 'upward' normal to the plane of the jaw.

When P is located on the upper teeth, the brush-

ing angle $\beta$ is defined as:

$$\beta = \arctan2\big((h \cdot n), \; -(h \cdot z)\big)$$

When P is located on the lower teeth, the brushing angle $\beta$ is defined as:

$$\beta = \arctan2\big((h \cdot n), \; (h \cdot z)\big)$$

The vector operations are the inner product (i.e. the dot product) and hence deliver a scalar number. The scalar number is applied to the arctan2 function to obtain the brushing angle.

The arctan2 function has two arguments. It recieves the cosine and sine components (or x and y compents) and can properly calculate in which of the four possible quadrants the derived angle lies.

These values can be converted to degrees by multiplying by $180/\pi$.

These transformations encode the geometric functions of projecting the bristle hairs onto the plane spanned by the vectors n and z. The brushing angle is the angle between

- z (upper jaw) or z (lower jaw), and the projected bristle hairs.

Thus, the brushing angle is the angle between two planes, (i) the tooth plane determined by ($t, z$) and (ii) the toothbrush plane determined by ($t, h$).

Based on the angle definitions and interpretation, three categories of user movement may be defined when brushing a specific tooth:

(i) The toothbrush rotates around the t-axis (gumline). Angle detection and coaching focuses on coaching such motion to stay optimally at the 45 degrees Bass-angle.
(ii) The toothbrush moves on the tooth plane. This kind of motion can be typically caused by holding the brush more vertically than horizontally. To promote the maximal contact with jawline, users should be promoted to hold the brush horizontally.
(iii) The toothbrush moves on the toothbrush plane. This kind of motion does not seem to be natural because the toothbrush moves away from the tooth surface, but it may happen when the toothbrush moves from the next tooth.

Movements (i) and (ii) in particular are monitored and coached.

The algorithms calculate the brushing angle $\beta$ for each timestep (typically 1/30 second) of the brushing session and saves this in combination with the IMU sensor data.

During the training procedure, the IMU data will be used as input, and the ideal brushing angle functions as the ground-truth that the feedback aims to achieve. During the training procedure, the sensor data will be used as input, and the ideal brushing angle functions as the ground-truth that is compared with the output of the AI model. During the training procedure, the AI model parameters are updated in such a way that the angle predictions are as close as possible to the ground-truth angles (by minimizing the difference).

Hence, when an AI model predicts the brushing angle, the difference to the ideal brushing angle is to be minimized. This difference (the loss function) should converge. When naively using a simple mean absolute difference in angles, there is a potential issue arising from the circular definition of these angles, where an angle of -179 is only 2 degrees away from an angle of +179 degree.

To address this issue the cosine and sine components of the brushing angle may be predicted (effectively a vector with length = 1) and the ground truth is also converted to the cosine and sine of the ground truth angle. Next, the loss function (i.e. the loss that is minimized while training) can be expressed as 1 minus the cosine similarity:

$$L = 1 - v_{gt} \cdot v_{pred}$$

The loss function is 1 minus the inner product between the two vectors.

Instead of this loss formulation, the cosine similarity may be used to determine the angle error (difference) and calculate a mean squared (or mean absolute) error on this error angle.

In both cases, the current usage angle is compared with the ideal usage angle using a metric which is based on sine and cosine values.

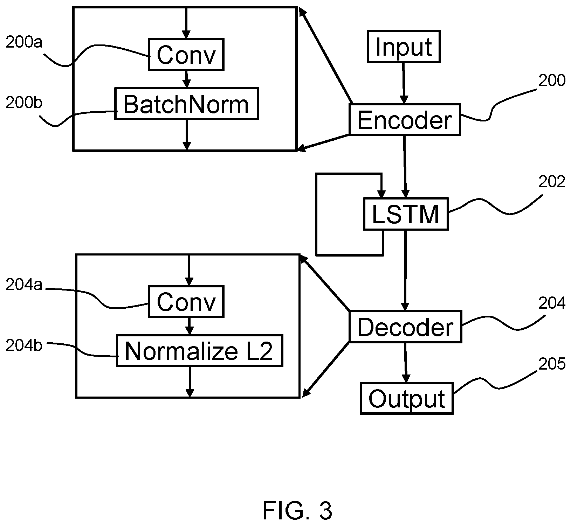

As shown in Fig. 3 the AI model for angle prediction consists of an encoder 200, an LSTM layer 202 and a decoder 204. A brushing angle prediction is provided as output 205.

In the encoder 200, the input IMU sensor signals are filtered (linearly) by the convolution layer 200a and scaled by the batch normalization layer 200b. This filtered signal goes into the LSTM layer 202 that updates its internal (also called hidden) state.

Next, the hidden state of the LSTM is used as input to the decoder 204, that maps the hidden state into two channels (using a convolution layer 204a with 2 output channels, and a kernel size of 1).

As last step, these two channels are normalized in step 204b to represent a vector of length 1.

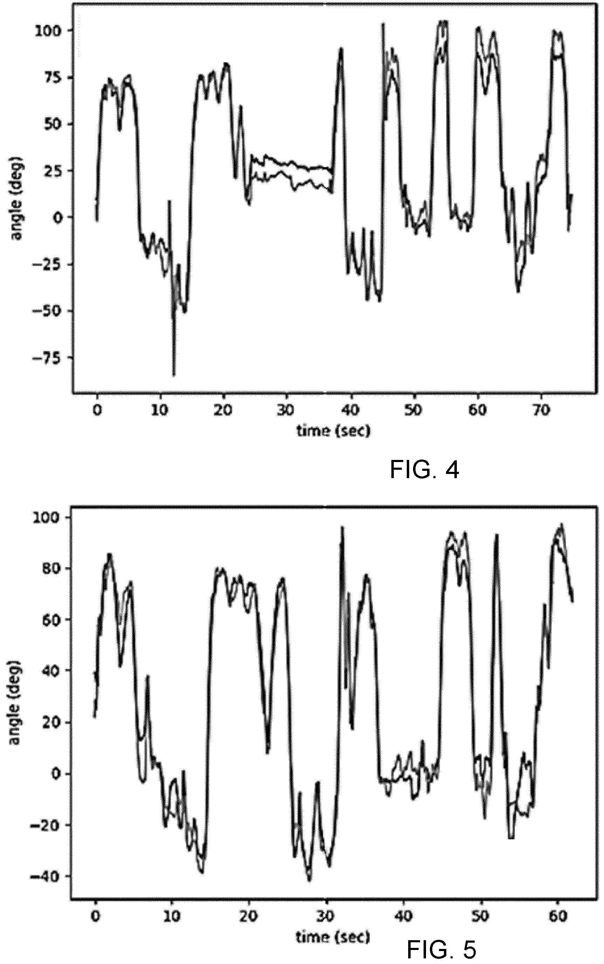

Figs. 4 and 5 show examples of the predicted brushing angles as function of time.

In each case, one plot is the predicted brushing angle and the other plot is the ground-truth brushing angle vs. time. The two plots are for two different brushing sessions. Figs. 4 and 5 show the accuracy of the brushing angle prediction.

The AI model is able to determine the toothbrush orientation relative to the teeth rather than relative to the real world (i.e. relative to the gravity vector). For this, the AI model takes head tilt into account, which cannot be achieved with a simple accelerometer system such as disclosed in US 8 393 037 and using the simple mathematical formulas disclosed. In particular, the AI can improve its predictions by learning from large amounts of data.

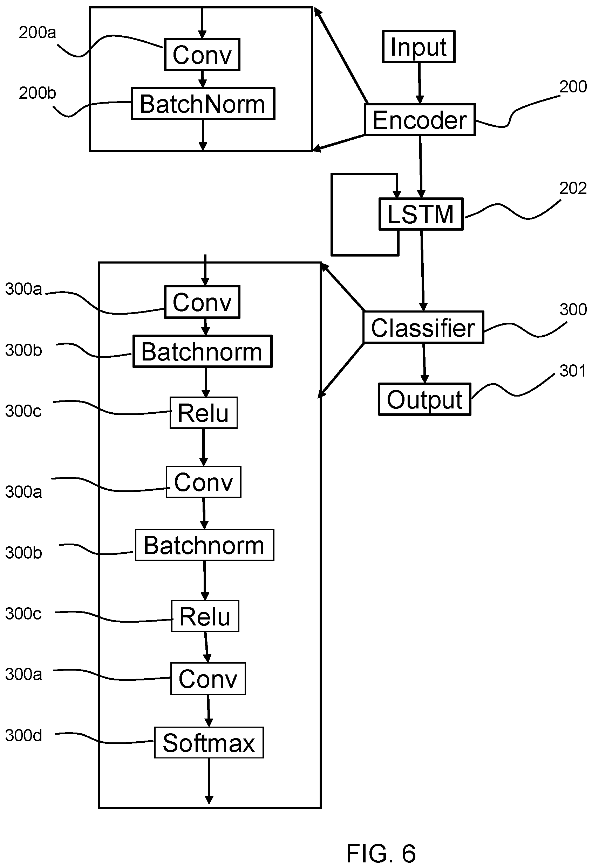

Fig. 6 shows the real-time model for brushing segment prediction. The angle prediction model has a very similar architecture to the real-time model for brushing segment prediction.

The same encoder 200 and LSTM layer 202 are used. Only the decoder is different, which consists a classifier 300 of multiple convolution-batch network-rectified linear unit layers 300a, 300b, 300c, i.e., "conv-bn-relu" layers. For classification and segmentation problems, the decoder ends typically with a softmax layer 300d to represent probabilities that sum up to 1. A brushing segment prediction is provided as output 301.

The architecture similarity enables the encoder/LSTM weights in the brushing segment prediction model to be reused for the angle prediction model. This may lead to better angle prediction as the brushing segment model is trained on a much larger dataset with segment labels. The decoder is for example trained on a dataset for which brushing angles are available, or the encoder/LSTM layer can be fined tuned after certain training epochs (transfer learning).

The two AI models may be unified into a single model that predicts the brushing segment and brushing angle at the same time, by having only a single encoder and LSTM, while having two different output heads.

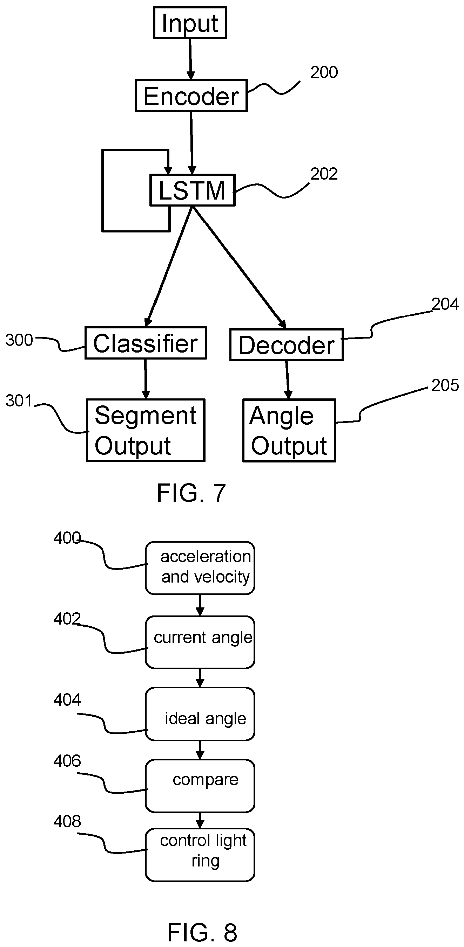

This is shown in Fig. 7. One head is for predicting the brushing segment and another head is for predicting the brushing angle. This model is much smaller than having two separate models (only slightly larger than the original brushing segment model, as the decoder in the angle prediction model is very small).

The controller has a comparator, the output of which is used to control the light ring. It determines the brushing angle in relation to the current brushing segment. For each brushing segment, there is a target brushing angle $\beta_{target}$. If a user is brushing a segment for more than $\tau$ seconds while being more than $\Delta$ degrees away from the target brushing angle, an animation will be shown by the light ring indicating to the user that they should rotate their toothbrush in the clockwise or anticlockwise direction (to rotate towards the target brushing angle).

Both the target brushing angle $\beta_{target}$ and the range $\Delta$ are segment dependent. The time delay $\tau$ before an indication is provided is for example in the range 4 to 10 seconds.

To achieve smooth coaching behavior, the target coaching angle can start from a typical angle which is related to a user's personal situation (e.g. the average angle from the past 10 sessions, or the typical angle from a certain population). Over time, the target angles can be moved closer to the ideal Bass angles (45 degrees). The typical/personalized values are used in order not to directly give excessive angle feedback.

The example above makes use of a light output ring formed as a line of discrete LEDs. The light output ring may instead be based on a rolled up display, enabling light motion patterns to be displayed along the longitudinal axis of the toothbrush as well as around the toothbrush (radially). A small (bright) display (e.g. planar) may be used in combination with lightguides to direct the light output to different segments forming a light ring around the handle.

The angle prediction model can also run offline for post-brushing analyses, to provide brushing insights in a brushing report. For example, for each segment, a report can be provided about how much of the brushing time was with the right angle (using the Bass angle technique). Additionally, more detailed brushing angle and time related information may be provided for the last brushing sessions. Examples of suitable statistics are the average or median brushing angle (per teeth segment), standard deviation, amount of jawline covered (in percentage) and amount of teeth covered (in percentage).

The real-time angle coaching feedback is not limited to be implemented only with the light ring of the power toothbrush. Additional feedback may be implemented on a separate device connected to the toothbrush, such as a charging station, smart phone, or other smart gadgets.

In the next generation of toothbrushes, a directional force sensor will be integrated. Such a force sensor can be used to measure the direction of the force exerted by the brush head on the teeth/gum. This provides an additional way to measure (or validate) the brushing angle.

Fig. 8 shows a method of providing usage angle guidance for a personal health care device comprising a device head and a device handle.

In step 400, measured accelerations and angular velocities of the device are received. In step 402 they are processed to derive a current usage angle. An ideal usage angle is determined in step 404 and the current usage angle and the ideal usage angle are compared in step 406.

The light output ring around the device handle is controlled in step 408 to provide feedback to the user of the device as explained above.

The example above is based on a toothbrush, which monitors brushing angle. However, the correct operation of other personal care depends on the right usage angle, such as shavers, and intense pulsed light (IPL) photo epilation devices.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A personal health care device (100) comprising:

   a device head (102) and a device handle (104);
   a sensor (106) for providing a sensor output which depends on a motion or orientation of the device;
   a light output ring (110, 112) for generating a rotational lighting effect around the device handle; and
   a controller (108) for processing the sensor output, wherein the processor is configured to:

   derive a current usage angle from the sensor output;
   determine an ideal usage angle;
   compare the current usage angle and the ideal usage angle; and
   control the light output ring to provide feedback to the user of the device,

   wherein the rotation of the rotational lighting effect indicates a direction of device rotation required to approach the ideal usage angle.

2. The device of claim 1, wherein the light output ring (110, 112) comprises a ring of LEDs which define a set of angular segments.

3. The device of claim 1 or 2, wherein the controller (108) is configured to generate a light animation comprising a clockwise or anti-clockwise lighting pattern around the light ring.

4. The device of any one of claims 1 to 3, wherein the light output ring (110) is around a base of the device handle, opposite the device head.

5. The device of any one of claims 1 to 4, wherein the light output ring (112) is around a top of the device handle, adjacent the device head.

6. The device of any one of claims 1 to 5, wherein the controller comprises an AI model for determining the usage angle.

7. The device of claim 6, wherein the AI model comprises a LSTM model.

8. The device of any one of claims 1 to 7, wherein the controller is configured to compare the current usage angle and the ideal usage angle by comparing a metric which is based on sine and cosine values.

9. The personal health care device of any one of claims 1 to 8, comprising a powered toothbrush with a toothbrush head and a toothbrush handle, wherein the usage angle is a brushing angle, and the processor is configured to determine the ideal brushing angle by:

   determining a current tooth segment at which the toothbrush head is located;
   determining the ideal brushing angle based on the current brushing segment.

10. The device of claim 9, wherein the controller comprises:

   a first neural network to determine the brushing angle;
   a second neural network to determine the brushing segment; and
   a comparator to compare the ideal and current brushing angle.

## Patentansprüche

1. Körperpflegevorrichtung (100), umfassend:

   einen Vorrichtungskopf (102) und einen Vorrichtungsgriff (104);
   einen Sensor (106) zum Bereitstellen einer Sensorausgabe, die von einer Bewegung oder Orientierung der Vorrichtung abhängt;
   einen Lichtausgabering (110, 112) zum Erzeugen eines rotierenden Lichteffekts um den Vorrichtungsgriff herum; und

eine Steuereinheit (108) zum Verarbeiten der Sensorausgabe, wobei der Prozessor für Folgendes konfiguriert ist:

Ableiten eines aktuellen Nutzungswinkels von der Sensorausgabe;
Ermitteln eines idealen Nutzungswinkels;
Vergleichen des aktuellen Nutzungswinkels und des idealen Nutzungswinkels; und
Steuern des Lichtausgaberings, um dem Benutzer der Vorrichtung eine Rückmeldung bereitzustellen,

wobei die Rotation des rotierenden Lichteffekts eine Vorrichtungsrotationsrichtung anzeigt, die erforderlich ist, um sich dem idealen Nutzungswinkel anzunähern.

**2.** Vorrichtung nach Anspruch 1, wobei der Lichtausgabering (110, 112) einen Ring aus LEDs umfasst, die eine Reihe von Winkelsegmenten definieren.

**3.** Vorrichtung nach Anspruch 1 oder 2, wobei die Steuereinheit (108) dazu konfiguriert ist, eine Lichtanimation zu erzeugen, die ein Beleuchtungsmuster im Uhrzeigersinn oder gegen den Uhrzeigersinn um den Lichtring herum umfasst.

**4.** Vorrichtung nach einem der Ansprüche 1 bis 3, wobei der Lichtausgabering (110) um eine Basis des Vorrichtungsgriffs, entgegengesetzt zum Vorrichtungskopf, herum verläuft.

**5.** Vorrichtung nach einem der Ansprüche 1 bis 4, wobei der Lichtausgabering (112) um eine Oberseite des Vorrichtungsgriffs, angrenzend an den Vorrichtungskopf, herum verläuft.

**6.** Vorrichtung nach einem der Ansprüche 1 bis 5, wobei die Steuereinheit ein KI-Modell zum Ermitteln des Nutzungswinkels umfasst.

**7.** Vorrichtung nach Anspruch 6, wobei das KI-Modell ein LSTM-Modell umfasst.

**8.** Vorrichtung nach einem der Ansprüche 1 bis 7, wobei die Steuereinheit dazu konfiguriert ist, den aktuellen Nutzungswinkel und den idealen Nutzungswinkel zu vergleichen, indem sie eine Metrik vergleicht, die auf Sinus- und Kosinus-Werten basiert.

**9.** Körperpflegevorrichtung nach einem der Ansprüche 1 bis 8, die eine elektrische Zahnbürste mit einem Zahnbürstenkopf und einem Zahnbürstengriff umfasst, wobei der Nutzungswinkel ein Putzwinkel ist und der Prozessor dazu konfiguriert ist, den idealen Putzwinkel durch Folgendes zu ermitteln:

Ermitteln eines aktuellen Zahnsegments, an dem sich der Zahnbürstenkopf befindet;
Ermitteln des idealen Putzwinkels basierend auf dem aktuellen Putzsegment.

**10.** Vorrichtung nach Anspruch 9, wobei die Steuereinheit Folgendes umfasst:

ein erstes neuronales Netzwerk zum Ermitteln des Putzwinkels;
ein zweites neuronales Netzwerk zum Ermitteln des Putzsegments; und
einen Komparator zum Vergleichen des idealen und aktuellen Putzwinkels.

**Revendications**

**1.** Dispositif de soins de santé personnels (100), comprenant :

une tête de dispositif (102) et un manche de dispositif (104) ;
un capteur (106) pour fournir une sortie de capteur qui dépend d'un mouvement ou d'une orientation du dispositif ;
une bague d'émission de lumière (110, 112) pour générer un effet lumineux rotatif autour du manche du dispositif; et
un dispositif de commande (108) pour traiter la sortie du capteur, dans lequel le processeur est configuré pour :

déduire un angle d'utilisation actuel à partir de la sortie du capteur ;
déterminer un angle d'utilisation idéal ;
comparer l'angle d'utilisation actuel et l'angle d'utilisation idéal ; et
commander la bague d'émission de lumière pour fournir un retour d'information à l'utilisateur du dispositif,

dans lequel la rotation de l'effet lumineux rotatif indique un sens de rotation du dispositif nécessaire pour se rapprocher de l'angle d'utilisation idéal.

**2.** Dispositif selon la revendication 1, dans lequel la bague d'émission de lumière (110, 112) comprend une bague de LED qui définissent un ensemble de segments angulaires.

**3.** Dispositif selon la revendication 1 ou 2, dans lequel le dispositif de commande (108) est configuré pour générer une animation lumineuse comprenant un motif lumineux dans le sens horaire ou antihoraire autour de la bague lumineuse.

4. Dispositif selon l'une quelconque des revendications 1 à 3, dans lequel la bague d'émission de lumière (110) est située autour d'une base du manche du dispositif, à l'opposé de la tête du dispositif.

5. Dispositif selon l'une quelconque des revendications 1 à 4, dans lequel la bague d'émission de lumière (112) est située autour d'un dessus du manche du dispositif, de manière adjacente à la tête du dispositif.

6. Dispositif selon l'une quelconque des revendications 1 à 5, dans lequel le dispositif de commande comprend un modèle d'IA pour déterminer l'angle d'utilisation.

7. Dispositif selon la revendication 6, dans lequel le modèle d'IA comprend un modèle LSTM.

8. Dispositif selon l'une quelconque des revendications 1 à 7, dans lequel le dispositif de commande est configuré pour comparer l'angle d'utilisation actuel et l'angle d'utilisation idéal en comparant une métrique qui est basée sur des valeurs de sinus et de cosinus.

9. Dispositif de soins de santé personnels selon l'une quelconque des revendications 1 à 8, comprenant une brosse à dents électrique avec une tête de brosse à dents et un manche de brosse à dents, dans lequel l'angle d'utilisation est un angle de brossage, et le processeur est configuré pour déterminer l'angle de brossage idéal par :

détermination d'un segment dentaire actuel sur lequel se trouve la tête de la brosse à dents ;
détermination de l'angle de brossage idéal sur la base du segment de brossage actuel.

10. Dispositif selon la revendication 9, dans lequel le dispositif de commande comprend :

un premier réseau neuronal pour déterminer l'angle de brossage ;
un deuxième réseau neuronal pour déterminer le segment de brossage ; et
un comparateur destiné à comparer l'angle de brossage idéal et l'angle de brossage actuel.

FIG. 1

FIG. 2

FIG. 3

FIG. 4

FIG. 5

200a — Conv

200b — BatchNorm

Input

Encoder — 200

LSTM — 202

300a — Conv

300b — Batchnorm

300c — Relu

300a — Conv

300b — Batchnorm

300c — Relu

300a — Conv

300d — Softmax

Classifier — 300

Output — 301

FIG. 6

Input

Encoder — 200

LSTM — 202

Classifier — 300

Decoder — 204

Segment Output — 301

Angle Output — 205

FIG. 7

400 — acceleration and velocity

402 — current angle

404 — ideal angle

406 — compare

408 — control light ring

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8393037 B
- US 20196082819 A
- US 2013074616 A